# EUROPÄISCHE PATENTSCHRIFT

(11) **EP 2 111 980 B1**
(45) Veröffentlichungstag und Bekanntmachung des Hinweises auf die Patenterteilung: **07.07.2010**
(21) Anmeldenummer: 09005623.5
(22) Anmeldetag: 22.04.2009
(51) Int. Cl.: B32B 27/08, B32B 27/18, B32B 27/30, B32B 27/32, B65D 77/20, B65D 81/34, B65D 65/00

(54) **Kunststofffolienverbund und mit diesem als peelbare Deckelfolie verschliessbare Schalen- und Muldenverpackung**
Polymer film laminate and packaging tray closable with said laminate as peelable lid film
Film composite en matière plastique et emballage de coque et de cavité refermable à l'aide dudit film de recouvrement pelable

(30) Priorität: 23.04.2008 DE 202008005665 U
(43) Veröffentlichungstag der Anmeldung: 28.10.2009
(73) Patentinhaber: Wipak Walsrode GmbH & Co. KG, 29656 Walsrode (DE)
(72) Erfinder: Dohmeier, Stefan, 29683 Bad Fallingbostel (DE); Nelke, Dr. Dorit, 29683 Bad Fallingbostel (DE)
(74) Vertreter: Lins, Martina

(56) Entgegenhaltungen:
- EP-A- 1 591 482
- EP-A- 1 637 559
- JP-A- 10 193 530
- US-A1- 2005 106 342

## Beschreibung

Die Erfindung betrifft einen Kunststofffolienverbund, der eine Trägerfolie und eine an einer Außenseite des Verbundes liegende, nach Heißversiegelung mit einem Polypropylen peelbare Siegelschicht enthält und der auf einer Schalen- oder Muldenverpackung aus Polypropylen als Deckelfolie dienen kann, sowie eine Schalen- oder Muldenverpackung aus Polypropylen Homopolymer oder einem überwiegend Polypropylen enthaltenden Copolymer mit einem Deckel aus dem Kunststofffolienverbund.

Kunststoff-Schalen- oder Muldenverpackungen werden unter anderem in der Lebensmittelindustrie eingesetzt, zum Beispiel für die Verpackung von Frischfleisch, Käse, Wurstwaren oder auch Fertiggerichten. Dabei ist es häufig erwünscht, dass die Ware durch die Verpackung und besonders durch den Deckel klar zu sehen und vom Käufer zu begutachten ist. Außerdem sollte der Deckel bedruckbar sein (Fensterdruck), um dem Kunden gleichzeitig die wichtigsten Informationen über die Ware, die Marke, den Hersteller usw. vermitteln zu können. Für ein ansprechendes Äußeres ist es auch wesentlich, dass der Deckel auf der Mulde straff aufgespannt ist, so dass die ganze Verpackung ein ordentliches, festes Erscheinungsbild bietet. Schließlich kommt hinzu, dass es häufig auch erwünscht ist, dass der Kunde den Deckel sauber und zerstörungsfrei und ohne allzu große Mühe von der Mulde abziehen kann. Der Deckel wird auf der Muldenkante in der Regel durch Heißsiegeln befestigt; die Möglichkeit diese Heißsiegelnaht zerstörungsfrei und mit weniger Kraft wieder Aufzuziehen bezeichnet man als "Peelfähigkeit".

Bislang war es nicht möglich, die oben genannten Anforderungen gleichzeitig zu erfüllen. Eine besonders klare und durchsichtige Deckelfolie, die gleichzeitig auch einen guten Glanz hat und transparent wie opak ein gutes Druckbild ermöglicht, kann mit Hilfe mono- oder biaxial gereckter Polyolefin-, Polyamid- oder PET-Folien hergestellt werden. Solche Folien sind auch mit einem besonders klaren Bild bedruckbar. Inzwischen ist es auch möglich, mono- oder biaxial orientierte Polymerfolien mit einem Schrumpf auszustatten, so dass sie besonders glatt auf der Mulde aufsitzen. Dies wird mit Folien erreicht, die bei Wärmebehandlung in einem begrenzten, gezielt einstellbaren Maße schrumpfen. Die abschließende Wärmebehandlung kann im Rahmen des Heißsiegelns geschehen oder bei einem Pasteurisier- oder Sterlisiervorgang an der fertig verschlossenen Verpackung. Im Widerspruch zu dem durch Schrumpf erzielten "Trommeleffekt" steht jedoch die Peelfähigkeit. Die Peelfähigkeit muss gerade so eingestellt sein, dass sich die Heißsiegelnaht, mit der der Deckel aufgesiegelt ist, nicht durch den Zug des straff aufgezogenen Deckels von alleine lösen kann. Dies kann problematisch sein. Außerdem besteht das Problem, dass die Peelzusätze, die dem Siegelschichtmaterial im Allgemeinen in Form eines Masterbatches zugegeben werden, die Folie eintrüben, was wieder der oben geforderten möglichst kristallklaren Durchsicht und/oder dem guten Druckbild entgegenwirkt.

Aus der JP 10193530 A ist bereits eine modifizierte peelbare-polyethylenbasierte Siegelschicht bekannt, die über eine propylenische Pufferschicht mit anderen Schichten verbunden ist. Ein Schrumpfverhalten wird dort nicht angesprochen.

Aus den Patenoffenlegungsschriften EP 1 591 482 A1 und EP 1 637 559 A1 sind weitere Harzzusammensetzungen für Deckelfolien mit Peeleigenschaften bekannt, die ebenfalls auf einer Mischung aus ethylenischen und propylenischen Copolymeren basieren.

Die US 2005/0106342 A1 offenbart einen Verpackungsschlauch aus einem heißsiegelbaren Mehrschichtpolymerfilm der eine äußere Substratschicht mit Schrumpf aus einem Polyester und eine innere heißsiegelbare Schicht aufweist, wobei die heißsiegelbare Schicht eine Copolyesterschicht ist.

Die Aufgabe der Erfindung besteht darin, die oben genannten Anforderungen miteinander zu verbinden. Gefordert ist also eine Deckelfolie aus einem Kunststofffolienverbund aus wenigstens einer Trägerfolie und einseitig einer ein- oder mehrlagigen Siegelschicht, wobei die Deckelfolie gleichzeitig
- in der Wärme schrumpffähig,
- peelbar und
- mit der Verpackung pasteurisierbar oder sterilisierbar
   sein soll. Vorteilhaft ist es außerdem, wenn die Deckelfolie zusätzlich

- möglichst klar und transparent (durchsichtig) und
- bedruckbar
ist.

Die Lösung der Aufgabe nach dieser Erfindung sieht vor, dass bei einem Kunststofffolienverbund der eingangs genannten Art die Trägerfolie eine mono- oder biaxial orientierte thermoplastische Polyamid- oder Polyesterfolie mit einem im Termperaturbereich von 60 bis 160 °C gemessenen Schrumpf von 0 bis 30 % ist und die Siegelschicht aus einer Einzelfolie oder einer coextrudierten Mehrschichtfolie besteht, die wenigstens in ihrer zur Siegelung außen liegenden Schicht folgende Zusammensetzung aufweist:
40 - 80 Gew.-% Polypropylen oder ein überwiegend Propyleneinheiten enthaltendes Copolymer zwischen Propylen und wenigstens einem weiteren Olefin,
0 - 40 Gew.-% eines anderen Polyolefins oder polyolefinischen Copolymeren als vorstehend,
20 - 40 Gew.-% wenigstens eines Polyacrylats, insbesondere eines Polymethacrylats, eines Ethylen-Methacrylsäure-Copolymers oder Propylen-Ethylen-Methacrylsäure-Terpolymers oder eines Polypropylenethylenacrylats sowie gegebenenfalls übliche Additive in Anteilen von vorzugsweise jeweils 0 - 10 Gew.-%,
wobei die Summe der Anteile 100 Gew.-% beträgt und wobei die Siegelschicht mit der Trägerfolie oder einem die Trägerfolie enthaltenden Folienverbund durch Kaschieren verbunden ist.

Die Erfindung sieht demnach vor, dass die Siegelschicht des Folienverbundes aus einem für Siegelschichten üblichen Polypropylen-Copolymer besteht und mit einem Peelbatch aus 20 - 40 Gew.-% wenigstens eines Polyacrylats, insbesondere eines Polypropylenethylenacrylats, gegebenenfalls unter Zusatz üblicher Additive in Anteilen von vorzugsweise jeweils 0 - 10 Gew.-%, versehen ist. Bei dem Acrylat des Polymers kann es sich um Methacrylat handeln, bevorzugt ist Polymethacrylat, Ethylen-Methacrylsäure-Copolymer oder Propylen-Ethylen-Methacrylsäure-Terpolymer.

Dieses Peelbatch ermöglicht eine gute Peelbarkeit bei Auseinanderziehen der Naht (Zugrichtung im Wesentlichen senkrecht zur Naht), obwohl die Heißsiegelnaht gegen Scherkräfte durch den aus einem möglichen Schrumpf der Deckelfolie, d.h. den Trommeleffekt, entstehenden seitlichen Zug gut stabil bleibt. Gleichzeitig trübt der neue Peelzusatz die Folie nicht ein, so dass die Transparenz und Klarheit erhalten bleibt.

Vorzugsweise wird der Schrumpf der Trägerfolie so eingestellt, dass er 10 bis 30 % beträgt. Hierfür wird eine entsprechend schrumpffähige Polyamid-Trägerfolie verwendet, die diesen Effekt auf den gesamten Folienverbund überträgt. Die weichere Siegelschicht passt sich in dieser Hinsicht der Trägerfolie an. Geeignete Polyamid-Materialien sind im Handel erhältlich. Polyamid-Trägerfolien sind dem Fachmann bekannt. Als Polyesterfolien sind BOPET-Folien bevorzugt, insbesondere BOPET HS (heat shrink).

Vorzugsweise besteht der gesamte Verbund ausschließlich aus der Trägerfolie und der einseitig aufkaschierten Siegelschicht, um die Deckelfolie möglichst einfach, transparent und kostengünstig zu halten.

Die Siegelschicht kann eine Einzelschicht mit der vorgenannten Zusammensetzung sein oder eine coextrudierte Mehrschichtfolie, die zusätzliche Schichten, wie z. B. eine Gas- und/oder Feuchtigkeitsbarriereschicht, eine spezielle Aromasperrschicht oder andere Funktionsschichten enthält.

Vorzugsweise ist die Siegelschicht eine 5-Schichtfolie aus einer ersten Schicht mit der erfindungsgemäßen Siegelschichtzusammensetzung oder einem oder mehreren olefinischen Mono- oder Copolymeren, einer zweiten Schicht aus einem Haftvermittler, einer dritten Schicht aus einer polymeren Gas- und/oder Feuchtigkeitssperrschicht, einer vierten Schicht aus einem Haftvermittler und einer fünften Schicht aus der Siegelschichtzusammensetzung.

Die Gas- und/oder Feuchtigkeitssperrschicht kann insbesondere aus einer Ethylvinylalkoholschicht (EVOH), einer Siliziumoxidschicht (SiOₓ) oder einer Barrierepolyamidschicht (Barriere-PA) bestehen. Diese Barriereschichten und andere Barriereschichten sind dem Fachmann für den Zweck bekannt und die Materialien sind kommerziell erhältlich.

Die ein- oder mehrschichtige Siegelschicht kann wie üblich als Blas- oder Flachfolie hergestellt und auf die MOPA- oder BOPA-Trägerfolie mit handelsüblichem Kaschierkleber aufkaschiert werden.

In einer bevorzugten Ausführungsform der Erfindung ist die Siegelschicht weiß eingefärbt. Sie ergibt so einen guten Druckhintergrund.

Weiterhin ist in bevorzugter Ausführungsform eine der Schichten des Verbundes so bedruckt, dass wenigstens ein Druckbild zwischen den Schichten liegt. Der Verbund kann auch an wenigstens einer der Außenseiten des Verbundes bedruckt sein.

Auf der der Siegelschicht zugewandten Seite kann die Polyamid-Trägerschicht metallisiert oder mit einer Metallfarbe bedruckt sein.

Im Sinne der Erfindung ist es vorteilhaft, wenn die Siegelschicht einen Schmelzpunkt zwischen 105 °C und 200 °C besitzt.

Die nach DIN 55 529 gemessene Peelkraft auf Polypropylen beträgt vorzugsweise etwa 2 bis 8 N/15 mm.

Besonders bevorzugt ist es weiterhin - gerade in der Lebensmittelindustrie für die eingangs genannten Anwendungen - wenn der Verbund pasteurisations- und sterilisationsbeständig ist (Sterilisation, ca. 30 min bei 130 °C, Pasteurisierung bei 70 bis 100 °C).

Die Erfindung umfasst weiterhin eine Schalen- oder Muldenverpackung insgesamt, mit einer Schale oder einem Muldenkörper aus Polypropylen Homopolymer oder einem überwiegend Propyleneinheiten enthaltenden Polymer und einer Deckelfolie aus dem oben beschriebenen, erfindungsgemäßen Kunststofffolienverbund. Die Schalen bzw. Mulden der oben beschriebenen Verpackungen sind meist aus Polypropylen, und zwar in der Regel aus Homopolymer, welches sich gut tiefziehen und damit besonders leicht zu Mulden verarbeiten lässt. Es sind jedoch auch Copolymere für den Zweck bekannt. Die erfindungsgemäße Deckelfolie aus dem beschriebenen Kunststofffolienverbund ist für alle überwiegend propylenhaltigen Mulden geeignet.

### BEISPIELE für den erfindungsgemäßen Kunststofffolienverbund

Folie 1: BOPA//KK//CoPP/HV/EVOH/HV/CoPP+Peelbatch Dicke des auf BOPA kaschierten Siegelschichtverbundes: 80 µm
Folie 2: BOPA//KK//PP/HV/EVOH/HV/CoPP+Peelbatch Dicke des auf BOPA kaschierten Siegelschichtverbundes: 70 µm
Folie 3: BOPA//KK//CoPP(eingefärbt)/HV/Barriere-PA/HV/CoPP+Peelbatch Dicke des auf BOPA kaschierten Siegelschichtverbundes: 90 µm

| | |
|---|---|
| BOPA | biaxial orientiertes Polyamid (PA6, teilkristallin) mit Schrumpf >15% (längs und quer, gemessen bei 160 °C, nach 5 min), Dicke 15 µm, Schmelzpunkt (DSC) 220 °C, Dichte 1,15 g/cm³, |
| KK | handelsüblicher Polyurethan-Kaschierkleber |
| HV | Haftvermittler |
| CoPP | Polypropylen-Ethylen-Copolymer, Dicke |
| EVOH | Ethylenvinylalkohol |
| Peelbatch | 20 Gew.-% Polypropylen-Ethylen-Acrylat, bezogen auf CoPP-Masse der Einzelschicht |

Entsprechende weitere Beispiele (4 bis 6) ergeben sich, wenn anstelle von BOPA jeweils BOPET HS verwendet wird.

## Patentansprüche

1. Kunststofffolienverbund, der eine Trägerfolie und eine an einer Außenseite des Verbundes liegende, nach Heißversiegelung mit einem Polypropylen peelbare Siegelschicht enthält, **dadurch gekennzeichnet,**
**dass** die Trägerfolie eine mono- oder biaxial orientierte thermoplastische Polyamid- oder Polyesterfolie mit einem im Termperaturbereich von 60 bis 160 °C gemessenen Schrumpf von 0 bis 30 % ist und
**dass** die Siegelschicht aus einer Einzelfolie oder einer coextrudierten Mehrschichtfolie besteht, die wenigstens in ihrer zur Siegelung außen liegenden Schicht folgende Zusammensetzung aufweist:
40 - 80 Gew.-% Polypropylen oder ein überwiegend Propyleneinheiten enthaltendes Copolymer zwischen Propylen und wenigstens einem weiteren Olefin,
0 - 40 Gew.-% eines anderen Polyolefins oder polyolefinischen Copolymeren als vorstehend,
20 - 40 Gew.-% wenigstens eines Polyacrylats, insbesondere Polymethacrylats, eines Ethylen-Methacrylsäure-Copolymers oder Propylen-Ethylen-Methacrylsäure-Terpolymers oder eines Polypropylenethylenacrylats sowie gegebenenfalls übliche Additive in Anteilen von vorzugsweise jeweils 0 - 10 Gew.-%,
wobei die Summe der Anteile 100 Gew.-% beträgt und wobei die Siegelschicht mit der Trägerfolie oder einem die Trägerfolie enthaltenden Folienverbund durch Kaschieren verbunden ist.

2. Kunststofffolienverbund nach Anspruch 1, **dadurch gekennzeichnet, dass** der Schrumpf der Trägerfolie 10 bis 30 % beträgt.

3. Kunststofffolienverbund nach Anspruch 1 oder 2, **dadurch gekennzeichnet, dass** er aus der Trägerfolie und der einseitig aufkaschierten Siegelschicht besteht.

4. Kunststofffolienverbund nach einem der Ansprüche 1 bis 3, **dadurch gekennzeichnet, dass** die Siegelschicht eine 5-Schichtfolie aus einer ersten Schicht mit der Siegelschichtzusammensetzung oder einem oder mehreren olefinischen Mono- oder Copolymeren, einer zweiten Schicht aus einem Haftvermittler, einer dritten Schicht aus einer polymeren Gas- und/oder Feuchtigkeitssperrschicht, einer vierten Schicht aus einem Haftvermittler und einer fünften Schicht aus der Siegelschichtzusammensetzung ist.

5. Kunststofffolienverbund nach einem der Ansprüche 1 bis 4, **dadurch gekennzeichnet, dass** die Gas- und/oder Feuchtigkeitssperrschicht aus einer EVOH, einer SiOₓ oder einer Barriere PA-Schicht besteht.

6. Kunststofffolienverbund nach einem der Ansprüche 1 bis 5, **dadurch gekennzeichnet, dass** die Siegelschicht weiß eingefärbt ist.

7. Kunststofffolienverbund nach einem der Ansprüche 1 bis 6, **dadurch gekennzeichnet, dass** wenigstens eine der Schichten des Verbundes so bedruckt ist, dass wenigstens ein Druckbild zwischen den Schichten des Verbundes liegt.

8. Kunststofffolienverbund nach einem der Ansprüche 1 bis 7, **dadurch gekennzeichnet, dass** der Verbund wenigstens auf der der Siegelschicht abgewandten Außenseite bedruckt ist.

9. Kunststofffolienverbund nach einem der Ansprüche 1 bis 8, **dadurch gekennzeichnet, dass** die Polyamid- oder Polyester-Trägerschicht auf der der Siegelschicht zugewandten Seite metallisiert oder mit einer Metallfarbe bedruckt ist.

10. Kunststofffolienverbund nach einem der Ansprüche 1 bis 9, **dadurch gekennzeichnet, dass** die Siegelschicht einen Schmelzpunkt zwischen 105 und 200 °C besitzt.

11. Kunststofffolienverbund nach einem der Ansprüche 1 bis 10, **dadurch gekennzeichnet, dass** die nach DIN 55 529 gemessene Peelkraft auf Polypropylen 2 bis 8 N/15 mm beträgt.

12. Kunststofffolienverbund nach einem der Ansprüche 1 bis 11, **dadurch gekennzeichnet, dass** der Verbund pasteurisations- und sterilisationsbeständig ist.

13. Schalen- oder Muldenverpackung mit einer Schale oder einem Muldenkörper aus Polypropylen Homopolymer oder einem überwiegend Propylen enthaltenden Polymer und einer Deckelfolie aus dem Kunststofffolienverbund nach einem der Ansprüche 1 bis 12.

## Claims

1. Plastics foil composite comprising a backing foil and comprising a sealable layer which is situated at an external side of the composite and which is peelable after heat-sealing to a polypropylene, **characterized in that**
the backing foil is a mono- or biaxially oriented thermoplastic polyamide foil or, respectively, polyester foil with shrinkage of from 0 to 30%, measured in the temperature range from 60 to 160°C and that the sealable layer is composed of a single foil or of a coextruded multilayer foil which has the following constitution at least in its external sealable layer,
from 40 to 80% by weight of polypropylene or a copolymer, containing predominantly propylene units, of propylene with at least one further olefin,
from 0 to 40% by weight of a polyolefin or polyolefinic copolymer where these differ from the above,
from 20 to 40% by weight of at least one polyacrylate, in particular polymethacrylate, of an ethylene-methacrylic acid copolymer or propylene-ethylene-methacrylic acid terpolymer, or of a polypropylene-ethylene acrylate, and also, if appropriate, conventional additives, in proportions which are preferably in each case from 0 to 10% by weight,
where the total of the proportions is 100% by weight, and where lamination has been used to bond the sealable layer to the backing foil or to a foil composite comprising the backing foil.

2. Plastics foil composite according to Claim 1, **characterized in that** the shrinkage of the backing foil is from 10 to 30%.

3. Plastics foil composite according to Claim 1 or 2, **characterized in that** it is composed of the backing foil and of the sealable layer applied by monolateral lamination.

4. Plastics foil composite according to any of Claims 1 to 3, **characterized in that** the sealable layer is a 5-layer foil made of a first layer using the sealable-layer composition or one or more olefinic mono- or copolymers, a second layer made of an adhesion promoter, a third layer made of a polymeric gas- and/or moisture-barrier layer, a fourth layer made of an adhesion promoter and a fifth layer made of the sealable-layer composition.

5. Plastics foil composite according to any of Claims 1 to 4, **characterized in that** the gas- and/or moisture-barrier layer is composed of an EVOH layer, an SiOₓ layer, or a barrier PA layer.

6. Plastics foil composite according to any of Claims 1 to 5, **characterized in that** the sealable layer has been coloured white.

7. Plastics foil composite according to any of Claims 1 to 6, **characterized in that** at least one of the layers of the composite has been printed in such a way that there is at least one printed image between the layers of the composite.

8. Plastics foil composite according to any of Claims 1 to 7, **characterized in that** the composite has been printed at least on the external side facing away from the sealable layer.

9. Plastics foil composite according to any of Claims 1 to 8, **characterized in that** the polyamide backing layer or polyester backing layer has been printed with a metallic ink or metallized on the side facing towards the sealable layer.

10. Plastics foil composite according to any of Claims 1 to 9, **characterized in that** the melting point of the sealable layer is from 105 to 200°C.

11. Plastics foil composite according to any of Claims 1 to 10, **characterized in that** the peel force measured according to DIN 55 529 on polypropylene is from 2 to 8 N/15 mm.

12. Plastics foil composite according to any of Claims 1 to 11, **characterized in that** the composite is resistant to pasteurization and to sterilization.

13. Tray or trough packaging with a tray or a trough body made of polypropylene homopolymer or a polymer containing predominantly propylene and a lid foil made of the plastics foil composite according to any of Claims 1 to 12.

## Revendications

1. Feuille composite en matériau synthétique, qui contient une feuille support et une couche de scellage se trouvant sur une face extérieure du composite, pouvant être pelée après scellage à chaud avec un polypropylène, **caractérisée en ce que** la feuille support est une feuille en polyamide ou polyester, thermoplastique, orientée monoaxialement ou biaxialement, avec un retrait, mesuré dans la plage de température de 60 à 160°C de 0 à 30% et **en ce que** la couche de scellage est constituée par une feuille unique ou par une feuille à plusieurs couches, coextrudée, qui présente au moins dans sa couche extérieure pour le scellage la composition suivante :
- 40-80% en poids de polypropylène ou d'un copolymère de propylène et d'au moins une autre oléfine, contenant principalement des unités de propylène,
- 0-40% en poids d'une autre polyoléfine ou de copolymères polyoléfiniques comme ci-dessus,
- 20-40% en poids d'au moins un polyacrylate, en particulier un polyméthacrylate, un copolymère d'éthylène-acide méthacrylique ou un terpolymère de propylène-éthylène-acide méthacrylique ou un poly(acrylate de propylène-éthylène) ainsi que le cas échéant des additifs usuels en des proportions de préférence à chaque fois de 0-10% en poids,
où la somme des proportions est égale à 100% en poids et où la couche de scellage est liée par contrecollage à la feuille support ou une feuille composite contenant la feuille support.

2. Feuille composite en matériau synthétique selon la revendication 1, **caractérisée en ce que** le retrait de la feuille support est de 10 à 30%.

3. Feuille composite en matériau synthétique selon la revendication 1 ou 2, **caractérisée en ce qu'**elle est constituée par la feuille support et la couche dé scellage contrecollée sur une face.

4. Feuille composite en matériau synthétique selon l'une quelconque des revendications 1 à 3, **caractérisée en ce que** la couche de scellage est une feuille à 5 couches constituée par une première couche présentant la composition de la couche de scellage ou un ou plusieurs monomères ou copolymères oléfiniques, une deuxième couche constituée par un promoteur d'adhérence, une troisième couche constituée par une couche polymère de blocage des gaz et/ou de l'humidité, une quatrième couche constituée par un promoteur d'adhérence et une cinquième couche constituée par la composition de la couche de scellage.

5. Feuille composite en matériau synthétique selon l'une quelconque des revendications 1 à 4, **caractérisée en ce que** la couche de blocage des gaz et/ou de l'humidité est constituée par de l'EVOH, du SiOₓ ou une couche de PA formant une barrière.

6. Feuille composite en matériau synthétique selon l'une quelconque des revendications 1 à 5, **caractérisée en ce que** la couche de scellage est teintée en blanc.

7. Feuille composite en matériau synthétique selon l'une quelconque des revendications 1 à 6, **caractérisée en ce qu'**au moins une des couches du composite est imprimée de manière telle qu'au moins une image imprimée se trouve entre les couches du composte.

8. Feuille composite en matériau synthétique selon l'une quelconque des revendications 1 à 7, **caractérisée en ce que** le composite est imprimé sur au moins la face extérieure opposée à la couche de scellage.

9. Feuille composite en matériau synthétique selon l'une quelconque des revendications 1 à 8, **caractérisée en ce que** la couche support en polyamide ou en polyester est métallisée ou imprimée avec une encre métallique sur la face orientée vers la couche de scellage.

10. Feuille composite en matériau synthétique selon l'une quelconque des revendications 1 à 9, **caractérisée en ce que** la couche de scellage présente un point de fusion entre 105 et 200°C.

11. Feuille composite en matériau synthétique selon l'une quelconque des revendications 1 à 10, **caractérisée en ce que** la force de pelage sur du polypropylène, mesurée selon la norme DIN 55529, est de 2 à 8 N/15 mm.

12. Feuille composite en matériau synthétique selon l'une quelconque des revendications 1 à 11; **caractérisée en ce que** le composite est résistant à la pasteurisation et à la stérilisation.

13. Emballage en forme de bol ou d'auge avec un bol ou un corps en forme d'auge en homopolymère de polypropylène ou en polymère contenant principalement du propylène et une feuille de recouvrement en feuille composite en matériau synthétique selon l'une quelconque des revendications 1 à 12.
